# EUROPEAN PATENT SPECIFICATION

(11) **EP 0 508 964 B1**
(45) Date of publication and mention of the grant of the patent: **16.10.1996**
(21) Application number: 92830170.4
(22) Date of filing: 07.04.1992
(51) Int. Cl.: B60N 2/22, B60N 2/14

(54) **A vehicle seat, particularly for cars**
Fahrzeugsitz, insbesondere für Personenkraftwagen
Siège de véhicules, en particulier pour voitures

(30) Priority: 12.04.1991 IT TO910282
(43) Date of publication of application: 14.10.1992
(73) Proprietor: FIAT AUTO S.p.A., 10135 Torino (IT)
(72) Inventor: Dal Monte, Antonio, I-00196 Roma (IT)
(74) Representative: Serra, Francesco

(56) References cited:
- EP-A- 0 232 685
- EP-A- 0 248 773
- EP-A- 0 363 261
- EP-A- 0 403 446
- DE-A- 3 129 101
- FR-A- 2 326 164
- GB-A- 2 099 691

## Description

The present invention relates to vehicle seats. The invention has been developed with particular attention to its possible application to motor cars, particularly very small motor cars (so-called "city" cars) with internal-combustion or electric propulsion systems (see for example EP-A-0 232 685, corresponding to the preamble of claim 1).

In general, the space for housing the occupants (usually the driver and two passengers) in these cars is of necessity very small both longitudinally and transversely. Moreover, the space available in the passenger compartment is further reduced by the need to take account of the size of the power unit and, in the case of motor vehicles with electric propulsion, also of the energy-storage systems.

Furthermore, it should be remembered that the driver, who is usually situated centrally, must wear a safety belt which cannot be anchored to the car body by the usual means.

In these motor vehicles, it is also considered necessary, however, to offer a certain capacity for adjustment of the seats to the motorists' anthropometric characteristics and/or driving or travelling tastes to take account of variations in the anthropometric characteristics of the motoring population.

At the same time, it is also necessary to satisfy further requirements such as providing proper mountings for the safety belts and ensuring that the belts can withstand the dynamic stresses prescribed for type-approval tests. This requirement also affects the seat as a whole (so-called "crash" tests) which should also preferably have a certain, at least partial, ability to rotate towards the doors of the passenger compartment to facilitate access for the driver.

The object of the present invention is to provide a seat which can satisfy all the requirements described above extremely well, without appreciable penalties either from operative and functional points of view or from the point of view of its structural complexity and hence its manufacturing costs, which are of fundamental importance in this context.

According to the present invention, this problem is solved by virtue of a seat having the specific characteristics recited in claim 1. Further characteristics are recited in the dependent claims which follow.

The invention will now be described, purely by way of non-limiting example, with reference to the appended drawings, in which:
Figure 1 is a schematic side elevational view of the structure of a seat according to the invention,
Figures 2 and 3 show the adjustment (movement) characteristics of the seat of Figure 1,
Figures 4 and 5 show some details of construction of the backrest of the seat according to the invention, and
Figures 6 and 7 show schematically the characteristics which enable the squab of the seat according to the invention to rotate.

By way of premise, it should be noted that the terms "front", "rear", "upper", "lower", "right", "left", etc. as used in the following description and, where appropriate, in the appended claims refer to the normal direction of travel of the vehicle in which the seat according to the invention is fitted. Moreover, it will be noted that various possible embodiments of both the backrest and the squab of the seat will be described with reference to the appended drawings. -In this connection, it should be stressed that the specific embodiments and variants may also be combined in ways other than those shown specifically in the drawings.

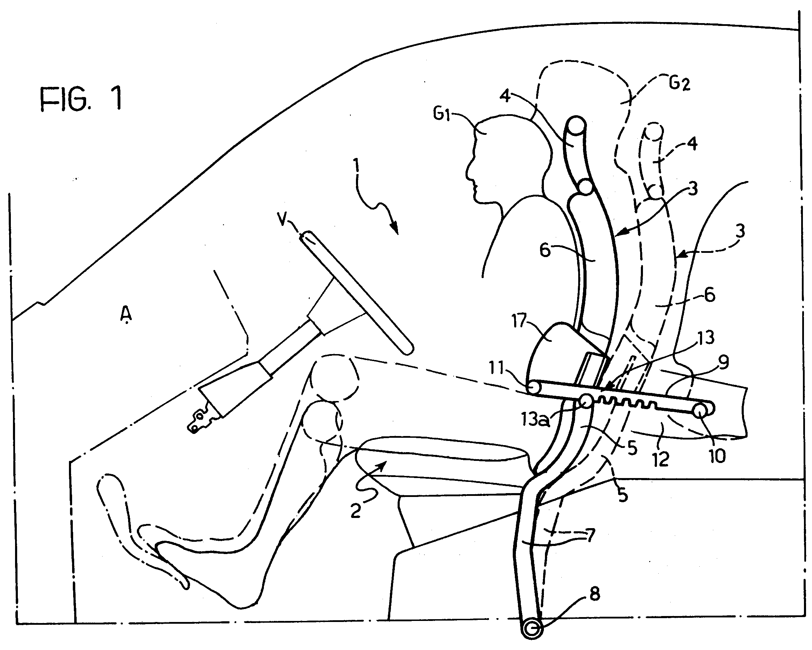

In Figure 1, a motor vehicle seat is generally indicated 1. The seat is intended, for example, to be occupied by the driver of a city car which has an internal combustion engine or an electric motor and whose passenger compartment A is intended to contain seats for a driver and two passengers. The following description will refer specifically to the driver's seat which is placed facing the steering wheel V. In general, however, it is intended that the solutions described with reference to this seat may also be applied to advantage to the other seats in the passenger compartment A.

Figure 1 shows schematically two different adjustment positions of the seat 1 with reference to two drivers G₁ and G₂ whose anthropometric characteristics are considered to be at the extremes of the statistical spread (between the 5th and 95th percentiles) of the motoring population. Briefly, the driver G₁ is a driver "of small stature", whilst the driver G₂ is a driver "of large stature".

In widely known manner, the seat 1 may be considered to be constituted theoretically by two parts, that is to say, a seat portion (the "squab" for short) 2 and a backrest 3 with a functional or useful portion extending upwardly from the rear region of the squab 2 and carrying a headrest 4 at its upper end.

From EP-A-0 232 685 and DE-A-3 129 101 are known adjustment devices for motor vehicle seats in which the structures of the back and the squab are connected together.

As regards the adjustability of the seat 1 to the different anthropometric characteristics of the occupant, a first advantage of the invention is based on the acceptance of a degree of adjustability (movement) which is satisfactory from an ergonomic point of view but is somewhat removed from very rigid ergonomic standards from the point of view of body angles.

In the embodiment to which Figure 1 specifically relates, this result is achieved by the separation of the structure of the squab 2 from that of the backrest 3, the seat being adjusted to various body sizes solely by fore-and-aft movements of the backrest 3.

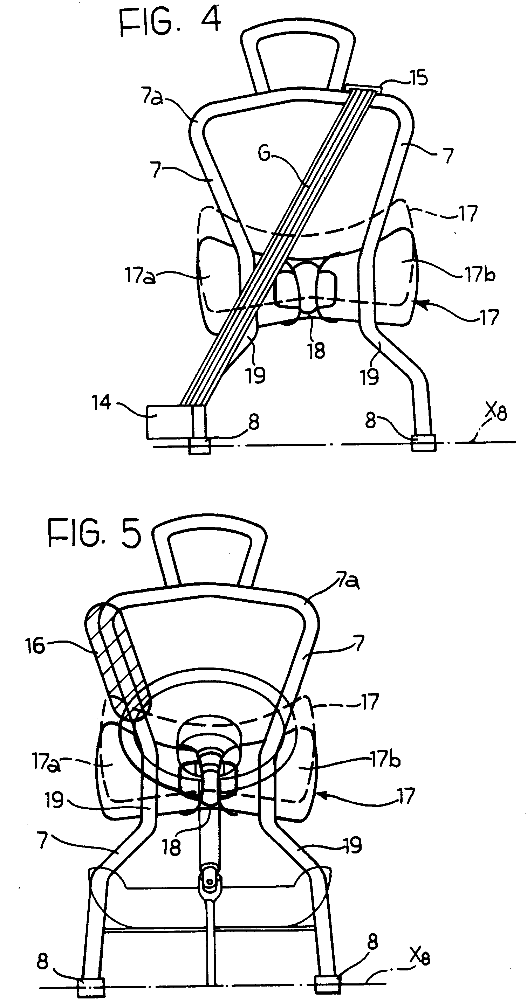

In this embodiment, the body or frame 5 of the backrest 3 which usually has padding 6 (according to widely known criteria) is of generally portal-like configuration with two generally vertical lateral arms or uprights 7 (see preferably Figures 4 and 5) connected at their tops by a connecting portion 7a on which the frame of the headrest 4 is mounted. The padding 6 has not been shown in the schematic representations of Figures 4 and 5 so as to show the generally hourglass-like shape of the body or frame 5 which is usually constituted by a tubular metal framework.

The lower ends of the lateral arms 7 of the squab frame are articulated about pins or shafts (shown at 8 in the drawings) extending generally horizontally transverse the direction of travel of the vehicle.

The backrest 3 as a whole can therefore pivot or swing about a horizontal axis X₈ defined by the pins 8 and hence located on the floor of the passenger compartment A so that the useful or functional portion of the backrest 3 (that is, the portion which extends above the squab 2) moves generally fore-and-aft of the passenger compartment A so as also to vary the useful or available length of the sitting surface defined by the squab 2.

The fact that the lower ends of the lateral arms or uprights 7 of the backrest 3 are anchored well (for example 30-35 cm) below the squab 2 on the floor of the passenger compartment A enables the backrest 3 to be fixed firmly to the basic structure of the vehicle so that it also has the necessary resistance to impact stresses. In practice, the backrest 3 can thus withstand the stresses applied to it by the safety belts G (fitted according to the criteria which will be described further below), the headrest 4, in particular, can withstand so-called whiplash, and the backrest as a whole can also absorb the violent stresses prescribed for the type-approval tests (so-called "crash" tests) without damage.

The fact that the fore-and-aft adjustment of the seat 1 as a whole is achieved solely by the movement of the backrest 3 as a result of the aforementioned arcuate pivoting or swinging movement permits provision to be made for the other movement criteria of the squab 2 (as will be seen better from the following), for example, it may be rotatable in a horizontal or substantially horizontal plane so as to facilitate access to the seat.

Since the main strength of the seat 1 (its ability to withstand seat-belt stresses, whiplash, and "crash" tests) is in the backrest 3, the squab 2 (even if it remains in a fixed position without rotating sideways) can be mounted on a structure F which is not particularly strong from the point of view of mechanical stresses, for example, in city cars, a light cover for protecting the propulsion members and, in the case of an electric motor, the energy-storage systems.

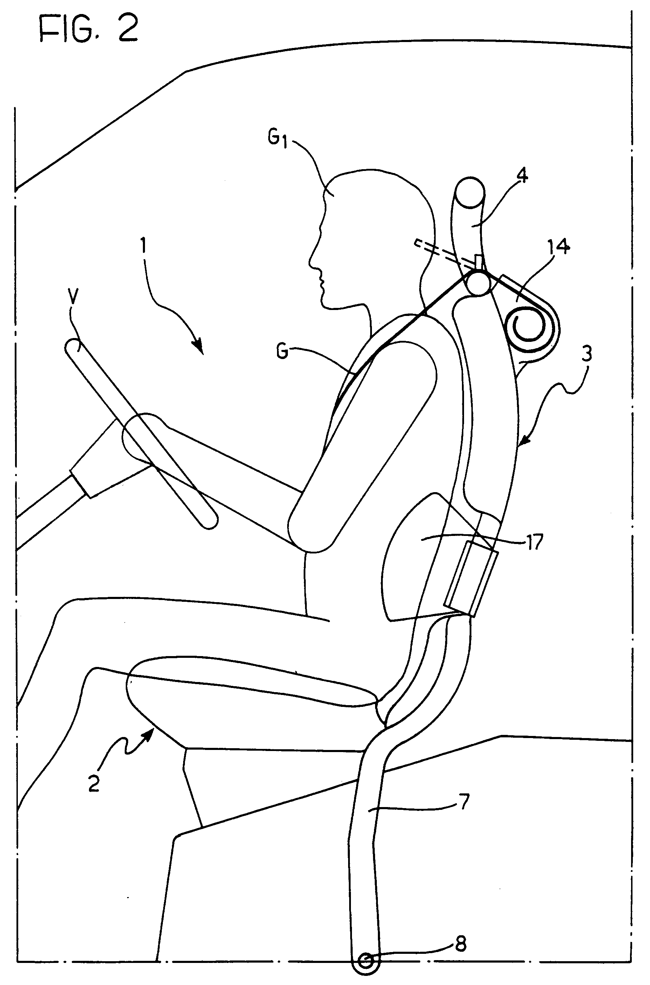

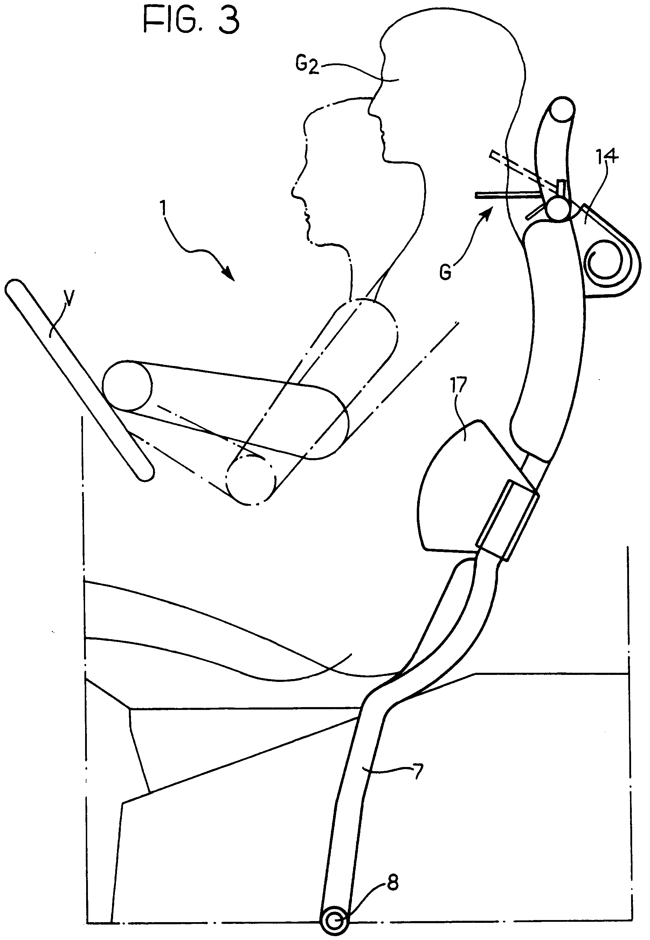

The arrangement described thus enables easy adjustment of the seat both for a driver of low stature (G₁ of Figure 2) and for a driver of large stature (G₂ of Figure 3). This is all due to the generally arcuate movement of the backrest 3 which enables the driver to select his preferred position between the extreme positions permitted (usually within an angular range of pivoting of the backrest 3 of at least 15°) and then to lock the backrest 3 in that position.

In order to lock the backrest 3 so as to prevent it from tilting forwards or backwards undesirably, particularly when under way, a system comprising a pivoting lever 9 articulated (at 10) in a position generally behind the backrest 3 may be used, as shown schematically in Figure 1. The lever 9 projects forwardly of the backrest with a handle or knob 11 which can be gripped by the driver to overcome the reaction of a biasing spring 12. The spring biases the lever 9 towards a locking position in which, for example, teeth 13 on the underside of the lever 9 cooperate with a pin 13a on the frame 5 of the backrest 3. In this connection, the locking system described preferably acts on both lateral arms or uprights 7 of the backrest. This all enables the backrest to be locked sufficiently robustly to withstand the stresses of the safety belts correctly.

For example, there may be two levers like the lever 9 described above, one on each side of the backrest and operated homologously by a single handle or knob 11.

As regards the ergonomic standards, a slightly more rearwardly-inclined position is generally considered permissible for people of large stature. Moreover, tall people adopt this position spontaneously. For people of small stature, however, a more upright back position should, in principle, be possible. Nevertheless, it should be noted that even in conventional cars (that is, with the possibility of very sophisticated adjustment of the seat structure) people of small stature spontaneously adopt positions more upright than those adopted by tall people. All this means that the adjustment of the backrest of the present invention does not actually detract appreciably from the adjustability of the seat.

Figures 2 to 4 show in greater detail the possible arrangements for the mounting of the safety belts G and, in particular, the upper end of the effective portion of the belt, that is, the loop which restrains the body of the driver G₁, G₂ in the seat 1.

Figures 2 and 3 relate in particular to a solution in which the upper end of the effective portion of the belt G is connected to a reel 14 fixed firmly to the rear of the backrest 3 level with the connecting portion 7a of the frame 7.

This mounting arrangement (with the reel 14 on the right-hand side of the backrest 3 with reference to the seat occupied by the driver) enables the effective portion of the belt G to be oriented correctly both for drivers G₁ of small stature and for drivers G₂ of large stature.

In the variant shown in Figure 4, however, the reel 14 is mounted in a fixed position (for example, on the floor of the passenger compartment on the left-hand side of the seat 1) so that the belt G extends across the rear of the backrest 3 until it reaches a guide element (for example, an arch 15) on the right-hand side of the upper connecting portion 7a of the backrest 3, and then extends through the guide element and across the front of the backrest to form the useful restraining portion of the belt G.

The solutions for the mounting of the safety belts shown in Figures 2, 3 and 4 may in many ways be considered equivalent. The solution of Figures 2 and 3 (with the reel 14 mounted directly on the top of the backrest) must be considered advantageous in terms of its weight, and because of the use of less material, its structurally simplicity, and the length of the belts. This is all achieved without adversely affecting the strength and hence the safety of the belts G precisely because the backrest 3 is anchored firmly to the structure of the vehicle at the lower ends 8 of the lateral arms or uprights 7.

As regards the characteristics of the padding of the backrest 3 in particular, Figure 5 shows that the frame (the lateral arms 7, the upper connecting portion 7a and the headrest 4) may be constituted by a "bare" tubular metal profile or its upper parts may, for example, have preformed padding elements (for example, shaped elements of foamed material moulded onto the metal frame 7) which in turn are intended to be surrounded by the outer padding proper.

By way of example, Figure 5 shows the arrangement of a pad 16, for example of foamed material, co-moulded onto the top of the frame 7. Such an element (of which there may also be another in a symmetrical position on the other side of the seat) has the advantage that it can be made slidable on the tubular structure of the frame 7 so as to enable the fine adjustment of its position by the user.

As already indicated above, the useful portion of the backrest 3, that is, the portion which is intended to project above the squab 2, is generally "hourglass"-shaped with an upper portion and a lower portion which are generally wider than the middle portion. This latter portion corresponds in general to the lumbar-sacral portion of the vertebral column of the occupant of the seat.

A generally butterfly-shaped support 17 may be used in this region and may be constituted by two complementary elements 17a, 17b whose inner, mutually facing ends are connected to each other by a connecting hinge element (for example, a rubber ring 18 or the like) which enables the curvature (in a horizontal plane) of the element 17 to be adjusted generally in dependence on the anthropometric characteristics of the occupant of the seat. This all takes place in the manner described in greater detail in the present Applicant's previous European Patent Appln. No. EP-A-0 420 824.

In particular, the two lateral arms 7 of the backrest frame may have two straight portions 19 in the lumbar-sacral region along which the butterfly- or hourglass-shaped restraining element 17 can slide up and down for precise adjustment in dependence on the tastes or requirements of the occupant of the seat.

This adjustability is indicated schematically by broken lines in Figures 4 and 5.

In general, it has been assumed above that the elements 16 and 17 described are to be incorporated in turn in a mass of thicker padding. This is not strictly necessary, however, since, at least in some particularly cheap solutions, the seat occupant's back could be supported correctly solely by the structures mounted on the frame of the backrest 3. This construction (which, it should be stressed, does not necessarily mean that the seat lacks comfort) could be used not only for the driver's seat, but also for the passenger seats, thus providing all the occupants of the passenger comparent with considerable transverse restraint, particularly with the use of the butterfly-shaped restraining element 17 (Figures 4 and 5). This minimises the asymmetrical effect sometimes produced during acceleration and deceleration when the seats are arranged at an angle to the longitudinal axis of the vehicle as is often the case in city cars because of the limited space available.

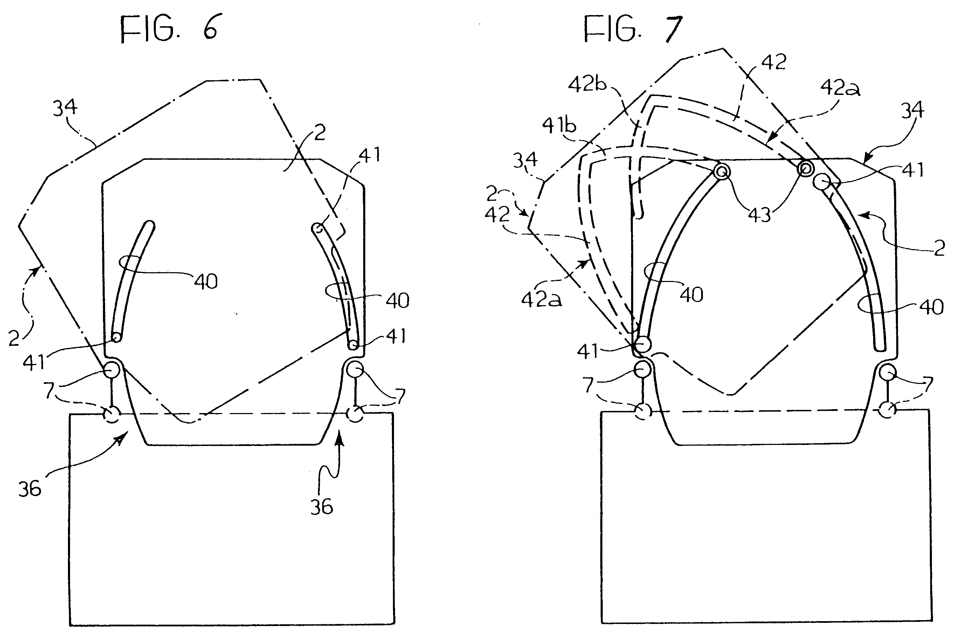

A further feature of the present invention, to which Figures 6 and 7 refer in particular, relates to the ability of the squab 2 of the seat 1 to rotate in a substantially horizontal plane so that the front region 34 of the squab 2 can be turned towards the doors of the passenger compartment to help the driver enter and leave the vehicle.

The concept of enabling the seat as a whole to rotate towards one of the doors of the motor-vehicle can be considered generally known since it has been used in the automotive industry in the past. The important characteristic in the context of its application to city cars is the fact that this rotation can take place towards both sides of the vehicle. In fact city cars may be designed preferably to be parked side by side without having a preferred side for the driver to enter and leave the vehicle.

For this purpose, the embodiment shown in Figure 6 (which illustrates the general operating principle of the solution) has arcuate guides 40 in the form of slots and pins 41 for cooperating slidingly with the arcuate guides 40, between the underside of the squab 2 and the top surface of its support structure (for example, the cover of the engine compartment or the battery compartment).

Naturally, the guides 40 may be in the form of upwardly-open channels or slots in the structure which supports the squab (the floor of the passenger compartment) and the pins 41 may project downwardly from the underside of the squab, or a converse arrangement may be adopted; the latter (the channels in the underside of the squab 2 and thus open downwardly) is in fact perhaps preferable in order to avoid the blockage of the guides by dirt accumulating in the passenger compartment of the motor vehicle.

The two guides 40 are generally convergent and the pins 41 are fixed at a distance apart corresponding to the distance separating the more divergent ends of the guides 40, that is, the ends of the guides 40 which are further apart. This ensures that the squab 2 cannot, in any event, perform a net forward movement in the direction in which the vehicle travels due to the sliding of the pins in the guides 40. In fact, such a movement is prevented by the reaction of the pins 41 against the walls of the guides 40.

The movement of the squab 2 as a result of the relative sliding of the guides 40 and the pins 41 can only take place, however, as a result of a rotation of the type shown schematicaly in Figure 6. In order to achieve this rotation, one of the pins 41 is kept in the rearwardmost position in its guide 40 (in the embodiment illustrated, the pin 41 on the left-hand side of the squab 2 in the theoretical plan view of Figure 6) and the other pin (that is, the pin on the right-hand side of Figure 6) consequently slides along its guide 40 which extends along an arc of a circle whose centre corresponds to the rear end of the other guide 40 (that is, the position of the pin 41 on the left-hand side of the seat, which is kept in a fixed position) and whose radius is equal to the - fixed - distance which separates the two pins 41.

The angular extent of this rotation is determined by the length of the guide 40. In practice, the squab 2 stops rotating when the pin 41 which is moved abuts the front end of its guide 40 in the condition shown in broken outline in Figure 6.

The arrangement and geometry of the guides 40 and the pins 41 is preferably specularly symmetrical relative to the longitudinal median plane of the squab 2 so that the seat rotates in the two senses under practically identical and symmetrical conditions.

It will also be appreciated that the rear region of the squab 2 shown in Figure 6 has two lateral recesses 36 which enable the fore-and-aft adjustment of the backrest 3, the lateral arms or uprights 7 of the frame of which are shown schematically.

Figure 7 shows how the solution of Figure 6 may be developed further to make the orientation of the squab 2 more secure and controlled by the provision of further guides 42 and further pins 43 (in a generally specularly symmetrical arrangement) in positions complementary to those of the guides 40 and the pins 41. In other words, if the guides 40 are on the squab support and the pins 41 are on the underside of the squab, the guides 42 are on the squab and the pins 43 are on the squab support or vice versa (guides 40 and pins 43 on the squab - guides 42 and pins 41 on the squab support).

The pins 43 are usually fixed at the front ends of the guides 40 and the guides 42 are, so to speak, generally ogival in the sense that each comprises:
- a first outer arcuate portion 42a which substantially coincides with a guide 40 when the squab 2 is in the normal travelling position, and
- a second outer portion 42b shaped like an arc of a circle with its centre on the homologous pin 41, that is, the pin 41 on the same side of the seat. The two portions 42a and 42b are connected at the front in the position occupied by the homologous pin 43 (on the same side of the seat) or - more precisely - at the position occupied thereby when the squab is in its normal travelling position. When the squab is rotated (to the left, for example, according to Figures 6 and 7) the right-hand pin 41 slides forwards in the corresponding guide 40 and the pin 43 on the same side of the squab slides in its guide 42 or, more precisely, along the outer portion 42a thereof. The pin 41 on the opposite side remains stationary at the rear end of the corresponding guide 40 whilst the (left-hand) pin 43 travels along the inner portion 42b of its guide 42.

Naturally, the principle of the invention remaining the same, the details of construction and forms of embodiment may be varied widely with respect to those described and illustrated, provided that one does not thereby depart from the scope of the present invention as defined by the appended claims.

## Claims

1. A vehicle seat (1) comprising a squab (2) and a backrest (3) extending upwardly from the rear region of the squab (2), the backrest (3) having means (7, 8) for articulating it to the structure of the vehicle, the means (7, 8) being a certain distance below the squab (2) and enabling the backrest (3) as a whole to pivot about a substantially horizontal axis (X₈) so that the position of the backrest (3) can be adjusted selectively as a result of a general pivoting movement of the backrest (3) about the substantially horizontal axis (X₈), characterised in that the structure of the squab is separated from that of the backrest, the means (7, 8) articulate the backrest directly to the structure of the vehicle and in that the squab (2) is kept in a fixed position fore-and-aft of the passenger compartment of the motor vehicle.

2. A seat according to Claim 1, characterised in that locking means (10 to 13) are associated with the backrest (3) and can act between the structure of the motor vehicle and the backrest (3) to lock the backrest (3) in one of a plurality of selectively determined positions within the range of its pivoting movement.

3. A seat according to Claim 1 or Claim 2, characterised in that the overall amplitude of the pivoting movement is about 15°.

4. A seat according to any one of the preceding claims, characterised in that the squab (2) can rotate generally in a horizontal plane.

5. A seat according to any one of Claims 1 to 4, characterised in that it includes at least one safety belt (G) connected kinematically to the backrest (3).

6. A seat according to Claim 5, characterised in that at least one end (14) of the effective portion of the safety belt (G) is fixed to the backrest (3).

7. A seat according to Claim 5 or Claim 6, characterised in that a roller device (14) is associated with one end of the safety belt and in that the roller device is mounted on the backrest (3), preferably near its top (7a).

8. A seat according to Claim 5 or Claim 6, characterised in that a roller device (14) is associated with the safety belt (G) and is mounted in a position generally remote from the top (7a) of the backrest and top portion (7a) of the backrest (3) includes guide means (15) for the effective portion of the safety belt (G).

9. A seat according to any one of the preceding claims, characterised in that the backrest (3) includes a generally rigid frame (7, 8) to which pads (6; 16; 17) are applied.

10. A seat according to Claim 9, characterised in that the pads (16, 17) are generally and selectively movable relative to the rigid frame (7, 8).

11. A seat according to any one of the preceding claims 9 or 10, characterised in that the pads include at least one lumbar support element (17).

12. A seat according to Claim 11, characterised in that the lumbar support element (17) is generally hourglass-or butterfly-shaped.

13. A seat according to Claim 11 or Claim 12, characterised in that the lumbar support element (17) includes two complementary parts (17a, 17b) whose relative positions can be changed selectively for adjustment to the anthropometric characteristics of the occupant of the seat.

14. A seat according to Claim 1, characterised in that the squab (2) has means (40, 41, 42, 43) for anchoring it to the floor of the passenger compartment (A), the means comprising guides (40, 42) and pins (41, 43), each pin being slidably engageable in at least one respective guide (40) so as to orient the squab (2) generally in a substantially horizontal plane.

15. A seat according to Claim 14, characterised in that the anchoring means (40, 41, 42, 43) comprise:
- two pins (41) in fixed positions at a predetermined distance apart on generally opposite sides of the squab (2),
- two guides (40) which are slidably engageable by respective pins (41), each of the guides extending along a path shaped generally like an arc of a circle whose centre is at the rear end of the other guide (40) and whose radius corresponds to the distance between the two pins (41),
the arrangement being such that, if the pin (41) on one side of the squab (2) is kept in a fixed position at one end of its guide (40), the squab (2) can be rotated about the pin which is kept in a fixed position by the sliding of the other pin (41) along its guide (40).

16. A seat according to Claim 15, characterised in that the anchoring means (40, 41, 42, 43) include:
- two further pins (43) fixed at the other ends of the two guides (40), and
- two further guides (42) which are slidably engageable by respective further pins (43) and are generally ogival in shape with an arcuate outer portion (42a) substantially coinciding with one of the two guides (40) and an inner portion (42b) in the form of an arc of a circle centred on a respective pin (41) and connected to the outer portion (42a).

17. A seat according to Claim 15 or Claim 16, characterised in that the guides (40) converge.

18. A seat according to any one of Claims 14 to 17, characterised in that the rear region of the squab (2) has recessed portions (36) for enabling the pivoting movement of the backrest (3) of the seat (1).

## Patentansprüche

1. Kraftfahrzeugsitz (1) umfassend einen Sitzteil (2) und eine sich vom hinteren Bereich des Sitzteils (2) nach oben erstreckende Rückenlehne (3), wobei die Rückenlehne (3) Mittel (7, 8) zur gelenkigen Verbindung mit der Kraftfahrzeugkarosserie hat und die Mittel (7, 8) in einem bestimmten Abstand unter dem Sitzteil (2) angeordnet sind und ein Schwenken der Rückenlehne (3) als ganzes um eine im wesentlichen horizontale Achse (X₈) ermöglichen, sodaß die Stellung der Rückenlehne (3) durch eine Schwenkbewegung der Rückenlehne (3) um die im wesentlichen horizontale Achse (X₈) gewählt werden kann, dadurch gekennzeichnet, daß die Sitzteilkonstruktion von jener der Rückenlehne getrennt ist, die Mittel (7, 8) die Rückenlehne direkt mit der Kraftfahrzeugkarosserie gelenkig verbinden, und daß der Sitzteil (2) in Längsrichtung des Passagierraumes des Kraftfahrzeuges in einer festen Stellung gehalten ist.

2. Sitz nach Anspruch 1, dadurch gekennzeichnet, daß Verriegelungsmittel (10 bis 13) der Rückenlehne (3) zugeordnet sind und zwischen der Kraftfahrzeugkarosserie und der Rückenlehne (3) wirksam sein können, um die Rückenlehne (3) in einer von mehreren wählbaren Positionen innerhalb des Bereichs ihrer Schwenkbewegung zu fixieren.

3. Sitz nach Anspruch 1 oder Anspruch 2, dadurch gekennzeichnet, daß der Gesamtbereich der Schwenkbewegung ungefähr 15° beträgt.

4. Sitz nach einem der vorhergehenden Ansprüche, dadurch gekennzeichnet, daß der Sitzteil (2) in einer im wesentlichen horizontalen Ebene drehbar ist.

5. Sitz nach einem der Ansprüche 1 bis 4, dadurch gekennzeichnet, daß er mindestens einen Sicherheitsgurt (G) umfaßt, der mit der Rückenlehne (3) kinematisch verbunden ist.

6. Sitz nach Anspruch 5, dadurch gekennzeichnet, daß mindestens ein Ende (14) des beweglichen Teiles des Sicherheitsgurtes (G) an der Rückenlehne (3) befestigt ist.

7. Sitz nach Anspruch 5 oder Anspruch 6, dadurch gekennzeichnet, daß eine Rolleneinrichtung (14) einem Ende des Sicherheitsgurtes zugeordnet ist, und daß die Rolleneinrichtung an der Rückenlehne (3), vorzugsweise nahe ihrem oberen Ende (7a), montiert ist.

8. Sitz nach Anspruch 5 oder Anspruch 6, dadurch gekennzeichnet, daß eine Rolleneinrichtung (14) dem Sicherheitsgurt (G) zugeordnet und in einer vom oberen Ende (7a) der Rückenlehne entfernt liegenden Stellung montiert ist, und daß der obere Bereich (7a) der Rückenlehne (3) Führungsmittel (15) für den beweglichen Teil des Sicherheitsgurtes (G) umfaßt.

9. Sitz nach einem der vorhergehenden Ansprüche, dadurch gekennzeichnet, daß die Rückenlehne (3) einen im wesentlichen starren Rahmen (7, 8) umfaßt, an dem Polster (6; 16; 17) angebracht sind.

10. Sitz nach Anspruch 9, dadurch gekennzeichnet, daß die Polster (16, 17) in bezug auf den starten Rahmen (7, 8) wählbar beweglich sind.

11. Sitz nach einem der vorhergehenden Ansprüche 9 oder 10, dadurch gekennzeichnet, daß die Polster mindestens ein Stützelement (17) für den Lumbalbereich umfassen.

12. Sitz nach Anspruch 11, dadurch gekennzeichnet, daß das Stützelement (17) für den Lumbalbereich im wesentlichen stundenglas- oder schmetterlingförmig ist.

13. Sitz nach Anspruch 11 oder Anspruch 12, dadurch gekennzeichnet, daß das Stützelement (17) für den Lumbalbereich zwei einander ergänzende Teile (17a, 17b) umfaßt, deren Stellungen zueinander zur Einstellung auf die anthropometrischen Merkmale des Sitzbenützers wahlweise veränderbar sind.

14. Sitz nach Anspruch 1, dadurch gekennzeichnet, daß der Sitzteil (2) Mittel (40, 41, 42, 43) für seine Verankerung am Boden des Passagierraumes (A) hat, wobei die Mittel Führungen (40, 42) und Stifte (41, 43) umfassen, wobei jeder Stift in mindestens eine entsprechende Führung (40) so verschiebbar eingreift, daß der Sitzteil (2) in einer im wesentlichen horizontalen Ebene ausrichtbar ist.

15. Sitz nach Anspruch 14, dadurch gekennzeichnet, daß die Verankerungsmittel (40, 41, 42, 43) umfassen:
- zwei Stifte (41) in festen Stellungen in einem bestimmten Abstand voneinander an gegenüberliegenden Seiten des Sitzteiles (2),
- zwei Führungen (40), in die die Stifte (41) verschiebbar eingreifen, wobei jede Führung sich entlang einem Weg erstreckt, der im wesentlichen die Form eines Kreisbogens hat, dessen Mittelpunkt am hinteren Ende der anderen Führung (40) liegt und dessen Radius dem Abstand zwischen den beiden Stiften (41) entspricht,
wobei die Anordnung so ist, daß, wenn der Stift (41) auf einer Seite des Sitzteils (2) an einem Ende seiner Führung (40) in einer festen Stellung gehalten ist, der Sitzteil (2) um den Stift, der in der festen Stellung gehalten ist, durch Verschieben des anderen Stiftes (41) entlang seiner Führung (40) drehbar ist.

16. Sitz nach Anspruch 15, dadurch gekennzeichnet, daß die Verankerungsmittel (40, 41, 42, 43) umfassen:
- zwei weitere Stifte (43), die an den anderen Enden der beiden Führungen (40) befestigt sind, und
- zwei weitere Führungen (42), in die die weiteren Stifte (43) verschiebbar eingreifen und die im wesentlichen die Form eines Spitzbogens haben, wobei dieser einen gebogenen äußeren Abschnitt (42a), der im wesentlichen mit einer der beiden Führungen (40) zusammenfällt, und einen inneren Abschnitt (42b) in Form eines Kreisbogens aufweist, dessen Mittelpunkt ein Stift (41) ist und der mit dem äußeren Abschnitt (42a) verbunden ist.

17. Sitz nach Anspruch 15 oder Anspruch 16, dadurch gekennzeichnet, daß die Führungen (40) konvergieren.

18. Sitz nach einem der Ansprüche 14 bis 17, dadurch gekennzeichnet, daß der hintere Bereich des Sitzteils (2) ausgenommene Bereiche (36) aufweist, um die Schwenkbewegung der Rückenlehne (3) des Sitzes (1) zu ermöglichen.

## Revendications

1. Siège (1) de véhicule, comprenant une assise (2) et un dossier (3) remontant au-dessus de la région arrière de l'assise (2), le dossier (3) ayant un dispositif (7, 8) d'articulation sur la structure du véhicule, ce dispositif (7, 8) étant à une certaine distance au-dessous de l'assise (2) et permettant au dossier (3) dans son ensemble de pivoter autour d'un axe pratiquement horizontal (X₈) afin que la position du dossier (3) puisse être ajustée sélectivement à la suite du mouvement général de pivotement du dossier (3) autour de l'axe pratiquement horizontal (X₈), caractérisé en ce que la structure de l'assise est séparée de celle du dossier, le dispositif (7, 8) articule le dossier directement sur la structure du véhicule, et l'assise (2) est maintenue en position fixe dans la direction avant-arrière du compartiment des passagers du véhicule à moteur.

2. Siège selon la revendication 1, caractérisé en ce qu'un dispositif de blocage (10 à 13) est associé au dossier (3) et peut agir entre la structure du véhicule à moteur et le dossier (3) pour bloquer le dossier (3) dans l'une de plusieurs positions déterminées sélectivement dans la plage de son mouvement de pivotement.

3. Siège selon la revendication 1 ou 2, caractérisé en ce que l'amplitude totale du mouvement de pivotement est d'environ 15°.

4. Siège selon l'une quelconque des revendications précédentes, caractérisé en ce que l'assise (2) peut tourner de façon générale dans un plan horizontal.

5. Siège selon l'une quelconque des revendications 1 à 4, caractérisé en ce qu'il comprend au moins une ceinture de sécurité (G) raccordée cinématiquement au dossier (3).

6. Siège selon la revendication 5, caractérisé en ce qu'une extrémité au moins (14) de la partie efficace de la sangle (G) de ceinture de sécurité est fixée au dossier (3).

7. Siège selon la revendication 5 ou 6, caractérisé en ce qu'un dispositif (14) à rouleau est associé à une première extrémité de la sangle de ceinture de sécurité, et en ce que le dispositif à rouleau est monté sur le dossier (3), de préférence près de sa partie supérieure (7a).

8. Siège selon la revendication 5 ou 6, caractérisé en ce qu'un dispositif à rouleau (14) est associé à la sangle de ceinture de sécurité (G) et est monté en position distante de façon générale de la partie supérieure (7a) du dossier, et la partie supérieure (7a) du dossier (3) comporte un dispositif de guidage (15) de la partie efficace de la sangle de ceinture de sécurité (G).

9. Siège selon l'une quelconque des revendications précédentes, caractérisé en ce que le dossier (3) comporte un châssis rigide de façon générale (7, 8) sur lequel sont appliquées des garnitures (6 ; 16 ; 17).

10. Siège selon la revendication 9, caractérisé en ce que les garnitures (16, 17) sont mobiles sélectivement de façon générale par rapport au châssis rigide (7, 8).

11. Siège selon l'une quelconque des revendications précédentes 9 ou 10, caractérisé en ce que les garnitures comprennent au moins un élément de support lombaire (17).

12. Siège selon la revendication 11, caractérisé en ce que l'élément de support lombaire (17) a une forme générale de sablier ou de papillon.

13. Siège selon la revendication 11 ou 12, caractérisé en ce que l'élément de support lombaire (17) comprend deux parties complémentaires (17a, 17b) dont les positions relatives peuvent être changées sélectivement pour l'ajustement aux caractéristiques anthropométriques de l'occupant du siège.

14. Siège selon la revendication 1, caractérisé en ce que l'assise (2) comporte un dispositif (40, 41, 42, 43) de fixation de l'assise au plancher du compartiment (A) des passagers, le dispositif comprenant des guides (40, 42) et des broches (41, 43), chaque broche pouvant coulisser dans au moins un guide respectif (40) afin que l'assise (2) puisse être orientée de façon générale dans un plan pratiquement horizontal.

15. Siège selon la revendication 14, caractérisé en ce que le dispositif de fixation (40, 41, 42, 43) comprend :
- deux broches (41) ayant des positions fixes à une distance prédéterminée sur des côtés opposés de façon générale de l'assise (2),
- deux guides (40) qui peuvent coopérer par coulissement avec les broches respectives (41), chacun des guides étant placé suivant un trajet ayant une forme générale d'arc de cercle dont le centre se trouve à l'extrémité arrière de l'autre guide (40) et dont le rayon correspond à la distance comprise entre les deux broches (41),
la disposition étant telle que, lorsque la broche (41) d'un côté de l'assise (2) garde une position fixe à une première extrémité de son guide (40), l'assise (2) peut tourner autour de la broche qui est maintenue en position fixe par coulissement de l'autre broche (41) le long de son guide (40).

16. Siège selon la revendication 15, caractérisé en ce que le dispositif de fixation (40, 41, 42, 43) comprend :
- deux broches supplémentaires (43) fixées aux autres extrémités des deux guides (40), et
- deux guides supplémentaires (42) qui peuvent coopérer par coulissement avec les broches supplémentaires respectives (43) et ont une forme générale ogivale avec une partie externe courbe (42a) qui coïncide pratiquement avec l'un des deux guides (40) et une partie interne (42b) sous forme d'un arc de cercle centré sur une broche respective (41) et raccordée à la partie externe (42a).

17. Siège selon la revendication 15 ou 16, caractérisé en ce que les guides (40) convergent.

18. Siège selon l'une quelconque des revendications 14 à 17, caractérisé en ce que la région arrière de l'assise (2) a des parties (36) de cavité destinées à permettre le mouvement de pivotement du dossier (3) du siège (1).
